# EUROPÄISCHE PATENTSCHRIFT

(11) **EP 4 357 627 B1**
(45) Veröffentlichungstag und Bekanntmachung des Hinweises auf die Patenterteilung: **20.08.2025**
(21) Anmeldenummer: 24162331.3
(22) Anmeldetag: 18.03.2022
(51) Int. Cl.: F16B 5/02, F16B 5/06

(54) **TOLERANZAUSGLEICHSVORRICHTUNG**
TOLERANCE COMPENSATING DEVICE
DISPOSITIF DE COMPENSATION DE TOLÉRANCE

(30) Priorität: 22.03.2021 DE 102021107048; 24.06.2021 DE 102021116374; 10.03.2022 DE 102022105689
(43) Veröffentlichungstag der Anmeldung: 24.04.2024
(62) Teilanmeldung aus: 22162996.7
(73) Patentinhaber: Witte Automotive GmbH, 42551 Velbert (DE)
(72) Erfinder: BENTE, Jan Christian, 45549 Sprockhövel (DE); GONZALEZ LOSA, Jose Luis, 45257 Essen (DE); WEINBERGER, Philip, 45239 Essen (DE); LEMKE, Sven, 45134 Essen (DE)
(74) Vertreter: Manitz Finsterwald Patent- und Rechtsanwaltspartnerschaft mbB

(56) Entgegenhaltungen:
- EP-A1- 3 789 621
- DE-A1- 102018 201 496
- DE-B3- 10 362 429

## Beschreibung

Die Erfindung betrifft eine Toleranzausgleichsvorrichtung umfassend ein Grundelement, ein mit dem Grundelement in Gewindeeingriff stehendes Ausgleichselement, welches einen sich in einer axialen Richtung erstreckenden Durchgang für ein Schraubelement ausbildet, eine Mutter, in welche das Schraubelement einschraubbar ist, und ein Halteelement mit einem das Grundelement haltenden ersten Schenkel, einem die Mutter haltenden zweiten Schenkel und einem den ersten und zweiten Schenkel verbindenden Verbindungsabschnitt, wobei der erste und zweite Schenkel unter Ausbildung eines Aufnahmespalts zur Aufnahme eines Bauteils zueinander beabstandet sind.

Bei einer bekannten Toleranzausgleichsvorrichtung dieser Art wird die Mutter über eine Aussparung des zweiten Schenkels, die sich im Bereich eines dem Verbindungsabschnitt abgewandten vorderen Endes des zweiten Schenkels befindet, in einer Richtung quer zur axialen Richtung in den zweiten Schenkel eingebracht, gewissermaßen also radial in diesen eingesetzt. Des Weiteren soll das Halteelement dieser bekannten Toleranzausgleichsvorrichtung eine hohe Steifigkeit und einen geringen Grad an Verformbarkeit aufweisen.

Die Druckschrift EP 3 789 621 A1 offenbart eine Toleranzausgleichsvorrichtung gemäß dem Oberbegriff des Anspruchs 1. Die Druckschriften DE 103 62 429 B3 und DE 10 2018 201 496 A1 offenbaren verwandte Vorrichtungen.

Der Erfindung liegt die Aufgabe zugrunde, eine Toleranzausgleichsvorrichtung der eingangs genannten Art zu schaffen, welche sich durch eine höhere Wirtschaftlichkeit auszeichnet.

Diese Aufgabe wird durch eine Toleranzausgleichsvorrichtung mit den Merkmalen des Anspruchs 1 gelöst.

Vorteilhafte Ausbildungen der Erfindung sind den abhängigen Ansprüchen, der Beschreibung und der Zeichnung zu entnehmen.

Gemäß einer Ausführungsform umschließt der zweite Schenkel die Mutter derart, dass die Mutter nur in der axialen Richtung in den zweiten Schenkel einsetzbar ist. Die Mutter wird also nicht radial von vorne in den zweiten Schenkel eingebracht, d.h. der zweite Schenkel braucht an seinem dem Verbindungsabschnitt abgewandten vorderen Ende nicht offen ausgebildet zu sein. Folglich kann die Mutter nicht aus dem zweiten Schenkel herausfallen und verloren gehen, z.B. während eines Transports der Toleranzausgleichsvorrichtung zu ihrem Montageort. Beispielsweise kann die Mutter durch den ersten Schenkel hindurch, gewissermaßen von oben, in den zweiten Schenkel eingesetzt werden. Es versteht sich, dass der erste Schenkel hierfür einen ausreichend großen Durchgang aufweisen muss, durch welchen die Mutter hindurchgeführt werden kann. Idealerweise erfüllt der Durchgang eine Doppelfunktion, indem er nach dem Einsetzen der Mutter in den zweiten Schenkel zur Aufnahme des Grundelements dient.

Gemäß einer weiteren Ausführungsform umschließt der zweite Schenkel die Mutter in einer rechtwinklig zur axialen Richtung orientierten Ebene vollständig. Dies trägt dazu bei, dass die Mutter nicht radial aus dem zweiten Schenkel herausfallen oder entnommen werden kann.

Die Mutter ist in dem zweiten Schenkel derart geführt, dass sie sich innerhalb einer zur axialen Richtung rechtwinklig erstreckenden Ebene nur in einer Richtung bewegen lässt. Die Mutter hat mit anderen Worten also nur in einer Richtung Spiel, beispielsweise in der Richtung in welcher die Toleranzausgleichsvorrichtung auf das Bauteil aufgeschoben wird. Dies ermöglicht es, Toleranzen in der Positionierung einer in dem Bauteil vorgesehenen Bohrung für das Schraubelement auszugleichen.

Zu einer noch höheren Wirtschaftlichkeit der Toleranzausgleichsvorrichtung trägt bei, wenn das Haltelement aus einem Kunststoffmaterial gebildet ist.

Das Halteelement ist mehrteilig ausgebildet. Konkret ist der Verbindungsabschnitt durch zwei getrennte Verbindungsteilabschnitte gebildet, insbesondere wobei der eine Verbindungsteilabschnitt in den ersten Schenkel und der andere Verbindungsteilabschnitt in den zweiten Schenkel übergeht.

Zur besseren Anpassung der Weite des Aufnahmespalts an die Dicke des aufzunehmenden Bauteils sind die Verbindungsteilabschnitte, insbesondere unidirektional, in der axialen Richtung relativ zueinander verschiebbar. Beispielsweise können die Verbindungsteilabschnitte über eine Sägezahnverrastung miteinander in Kontakt stehen.

Gemäß einer weiteren Ausführungsform weist die Toleranzausgleichsvorrichtung wenigstens ein Sicherungselement auf, durch welches ein im Aufnahmespalt aufgenommenes Bauteil an der Toleranzausgleichsvorrichtung sicherbar ist.

Beispielsweise kann ein Sicherungselement im Eingangsbereich angeordnet sein und/oder es kann ein Sicherungselement im Endbereich des Aufnahmespalts angeordnet sein. Ferner kann sich ein Sicherungselement ausgehend von dem ersten Schenkel in den Aufnahmespalt erstrecken und/oder es kann sich ein Sicherungselement ausgehend von dem zweiten Schenkel in den Aufnahmespalt erstrecken.

Das Sicherungselement kann beispielsweise eine Rastzunge umfassen, die dazu ausgebildet ist, mit einem an dem Bauteil ausgebildeten Rastvorsprung zusammenzuwirken und/oder mit einem Oberflächenabschnitt das Bauteils zusammenzuwirken und/oder in eine in dem Bauteil ausgebildete Rastöffnung einzugreifen.

Insbesondere kann die Rastzunge elastisch ausgebildet sein und ein in Richtung des Verbindungsabschnitts weisendes freies Ende aufweisen, sodass die Rastzunge beim Einführen des Bauteils in den Aufnahmespalt durch den Rastvorsprung des Bauteils ausgelenkt wird und beim Erreichen einer Endlage des Bauteils in dem Aufnahmespalt hinter dem Rastvorsprung einrasten kann. Alternativ oder zusätzlich kann das freie Ende der Rastzunge in eine Rastöffnung des Bauteils einrasten.

Zudem kann die Rastzunge elastisch ausgebildet sein und ein in Richtung des Verbindungsabschnitts weisendes freies Ende aufweisen, welches, wenn sich das Bauteil in einer Endlage in dem Aufnahmespalt befindet, durch einen Oberflächenabschnitt des Bauteils ausgelenkt wird. Durch die ausgelenkte Rastzunge wird das Bauteil in die axiale Richtung gedrückt, wodurch die Wirkung eines auf der gegenüberliegenden Seite des Bauteils angeordneten Sicherungselements verbessert werden kann, beispielsweise das Zusammenspiel zwischen einer auf der gegenüberliegenden Seite des Bauteils angeordneten Rastzunge und dem Rastvorsprung des Bauteils.

Das Sicherungselement kann auch einen Rastkeil umfassen, der dazu ausgebildet ist, in eine Rastöffnung des Bauteils einzugreifen. Insbesondere kann der Rastkeil elastisch ausgebildet sein und/oder ein sich in axialer Richtung verjüngendes Profil aufweisen, um das Eintauchen in die Rastöffnung zu erleichtern.

An dem Bauteil kann ein Einleger angebracht sein, welcher dazu dient, mit der Rastzunge und/oder dem Rastkeil zusammenzuwirken.

Nachfolgend wird die Erfindung rein beispielhaft anhand möglicher Ausführungsformen unter Bezugnahme auf die beigefügte Zeichnung beschrieben. Es zeigen:
- Fig. 1A: eine Längsschnittansicht einer ersten, nicht erfindungsgemäßen Ausführungsform einer Toleranzausgleichsvorrichtung;
- Fig. 1B: eine Längsschnittansicht der Toleranzausgleichsvorrichtung von Fig. 1A mit darin aufgenommenem Bauteil;
- Fig. 1C: eine perspektivische Ansicht der Toleranzausgleichsvorrichtung von Fig. 1A;
- Fig. 1D: eine Draufsicht auf ein Halteelement der Toleranzausgleichsvorrichtung von Fig. 1A;
- Fig. 2A: eine perspektivische Ansicht einer zweiten, erfindungsgemäßen Ausführungsform einer Toleranzausgleichsvorrichtung;
- Fig. 2B: eine Längsschnittansicht der Toleranzausgleichsvorrichtung von Fig. 2A;
- Fig. 2C: eine Detailansicht zu Fig. 2B;
- Fig. 3A: eine perspektivische Ansicht einer dritten, nicht erfindungsgemäßen Ausführungsform einer Toleranzausgleichsvorrichtung und eines darin aufzunehmenden Bauteils;
- Fig. 3B: eine perspektivische Rückansicht der Toleranzausgleichsvorrichtung von Fig. 3A;
- Fig. 3C: eine perspektivische Rückansicht der Toleranzausgleichsvorrichtung von Fig. 3A mit darin aufgenommenem Bauteil;
- Fig. 3D: eine Längsschnittansicht der Toleranzausgleichsvorrichtung und des aufzunehmenden Bauteils von Fig. 3A;
- Fig. 3E: eine Längsschnittansicht der Toleranzausgleichsvorrichtung von Fig. 3A mit darin aufgenommenem Bauteil;
- Fig. 4A: eine perspektivische Ansicht einer vierten, nicht erfindungsgemäßen Ausführungsform einer Toleranzausgleichsvorrichtung und eines darin aufzunehmenden Bauteils;
- Fig. 4B: eine Längsschnittansicht der Toleranzausgleichsvorrichtung von Fig. 4A mit darin aufgenommenem Bauteil;
- Fig. 4C: eine Längsschnittansicht der Toleranzausgleichsvorrichtung von Fig. 4A mit darin aufgenommenem Bauteil;
- Fig. 4D: eine Längsschnittansicht einer Variante der Toleranzausgleichsvorrichtung von Fig. 4A mit darin aufgenommenem Bauteil;
- Fig. 5A: eine perspektivische Ansicht einer fünften, nicht erfindungsgemäßen Ausführungsform einer Toleranzausgleichsvorrichtung und eines darin aufzunehmenden Bauteils;
- Fig. 5B: eine Längsschnittansicht der Toleranzausgleichsvorrichtung von Fig. 5A mit darin aufgenommenem Bauteil;
- Fig. 5C: eine Längsschnittansicht einer Variante der Toleranzausgleichsvorrichtung von Fig. 5A mit darin aufgenommenem Bauteil;
- Fig. 5D: eine Längsschnittansicht einer weiteren Variante der Toleranzausgleichsvorrichtung von Fig. 5A mit darin aufgenommenem Bauteil;
- Fig. 5E: eine Längsschnittansicht einer weiteren Variante der Toleranzausgleichsvorrichtung von Fig. 5A mit darin aufgenommenem Bauteil;
- Fig. 6A: eine perspektivische Ansicht einer sechsten, nicht erfindungsgemäßen Ausführungsform einer Toleranzausgleichsvorrichtung und eines darin aufzunehmenden Bauteils;
- Fig. 6B: eine Draufsicht auf die Toleranzausgleichsvorrichtung von Fig. 6A mit darin aufgenommenem Bauteil.

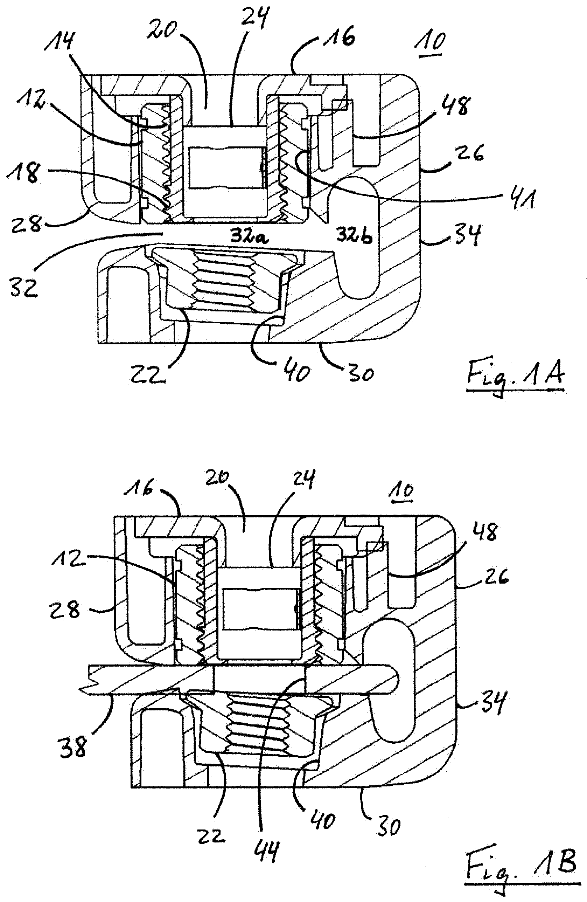

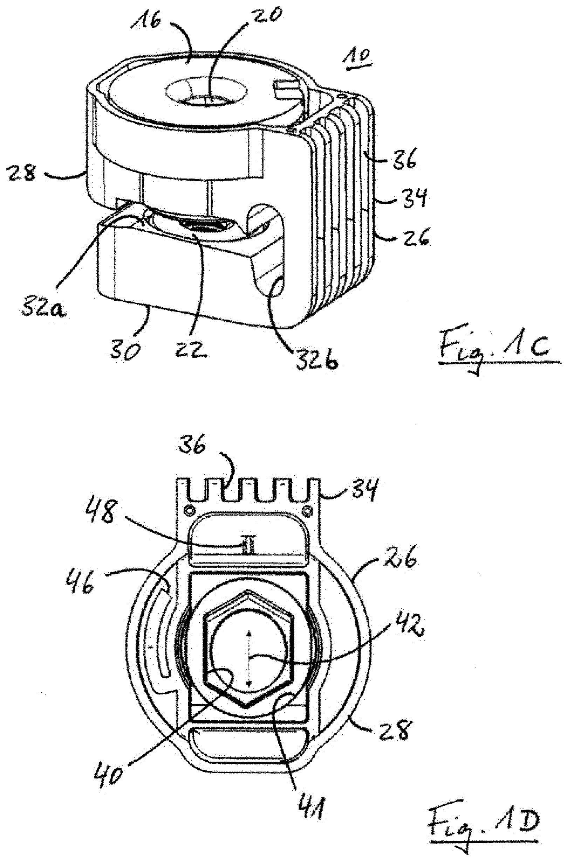

In Fig. 1A bis 1D ist eine erste, nicht erfindungsgemäße Ausführungsform einer Toleranzausgleichsvorrichtung 10 dargestellt. Die Toleranzausgleichsvorrichtung 10 umfasst ein hohlzylindrisches Grundelement 12, welches ein Innengewinde 14 ausbildet. In das Grundelement 12 ist ein ebenfalls hohlzylindrisches Ausgleichselement 16 eingeschraubt, welches zu diesem Zweck ein Außengewinde 18 aufweist. Die Längsmittelachsen des Innengewindes 14 und des Außengewindes 18 definieren eine axiale Richtung.

Das Ausgleichselement 16 bildet einen sich in der axialen Richtung erstreckenden Durchgang 20 aus, durch welchen ein in den Figuren nicht dargestelltes Schraubelement, beispielsweise eine Schraube oder ein Gewindebolzen, hindurchgeführt werden kann, um in eine Mutter 22 der Toleranzausgleichsvorrichtung 10 eingeschraubt zu werden.

Die Orientierungen des Innengewindes 14 und des Außengewindes 18 einerseits sowie der Gewinde des Schraubelements und der Mutter 22 andererseits sind gegenläufig ausgebildet, sodass sich das Ausgleichselement 16 beim Einschrauben des Schraubelements in die Mutter 22 aus dem Grundelement 12 heraus dreht, um einen Abstand zwischen zwei miteinander zu verbindenden Bauteilen zu überbrücken. Beispielsweise können das Schraubelement und die Mutter 22 jeweils ein Rechtsgewinde aufweisen, während es sich bei dem Innengewinde 14 und dem Außengewinde 18 um Linksgewinde handelt, oder umgekehrt. Zur Übertragung von Drehmoment von dem Schraubelement an das Ausgleichselement 16 ist ein Federelement 24 in dem Durchgang 20 angeordnet, welches mit dem sich durch den Durchgang 20 hindurch erstreckenden Schraubelement und mit dem Ausgleichselement 16 kraftschlüssig in Eingriff steht.

Sowohl das Grundelement 12 als auch die Mutter 22 sind in einem Halteelement 26 der Toleranzausgleichsvorrichtung 10 gehalten. Das Halteelement 26 ist einstückig aus einem Kunststoffmaterial gebildet und weist einen ersten Schenkel 28 zur Aufnahme des Grundelements 12 und einen zweiten Schenkel 30 zur Aufnahme der Mutter 22 auf.

Der erste Schenkel 28 und der zweite Schenkel 30 sind unter Ausbildung eines Aufnahmespalts 32 axial zueinander beabstandet und durch einen sich axial erstreckenden Verbindungsabschnitt 34 miteinander verbunden. An einer den Schenkeln 28, 30 abgewandten Rückseite des Verbindungsabschnitts 34 sind zur Vermeidung einer unnötigen Materialanhäufung mehrere sich axial erstreckende Nuten 36 ausgebildet. Es versteht sich, dass diese Nuten 36 sich auch rechtwinklig zu der axialen Richtung erstrecken oder sogar schräg zu dieser verlaufen und sich schneiden können.

Der Aufnahmespalt 32 dient zur Aufnahme eines Bauteils 38, beispielsweise eines Karosserieblechs oder einer Trägerstruktur, welches mit einem oberhalb des Ausgleichselements 16 befindlichen, in den Figuren nicht dargestellten anderen Bauteil verbunden werden soll. Der Aufnahmespalt 32 weist einen sich im Wesentlichen rechtwinklig zur axialen Richtung verlaufenden Hauptbereich 32a und einen sich an den Hauptbereich 32a anschließenden und an den Verbindungsabschnitt 34 angrenzenden Endbereich 32b auf. Der Endbereich 32b erstreckt sich beidseitig des Hauptbereichs 32a in der axialen Richtung, in Fig. 1A und 1B also nach oben und unten, wodurch der Aufnahmespalt 32 im Längsschnitt gesehen die Gestalt eines liegenden T erhält. Denkbar wäre aber auch ein Aufnahmespalt 32 in der Gestalt eines liegenden L, in welchem Fall sich der Endbereich 32b ausgehend von dem Hauptbereich 32a axial nur in eine Richtung erstrecken würde, d.h. also entweder nach oben oder nach unten.

Die Weite des Hauptbereichs 32a des Aufnahmespalts 32 muss nicht notwendigerweise konstant sein. So kann sich der Hauptbereich 32a in Richtung der freien Enden der Schenkel 28, 30, in Fig. 1A und 1B also nach links, beispielsweise aufweiten, um das Aufschieben der Toleranzausgleichsvorrichtung 10 auf das Bauteil 38 zu erleichtern. Außerdem kann sich der Hauptbereich 32a auch in Richtung des Endbereichs 32b leicht aufweiten. In jedem Fall ist die maximale Weite des Hauptbereichs 32a, d.h. das größte Ausmaß des Hauptbereichs 32a in der axialen Richtung gesehen, signifikant kleiner als die maximale Weite des Endbereichs 32b, d.h. als das größte Ausmaß des Endbereichs 32b in der axialen Richtung gesehen. Insbesondere kann die maximale Weite des Endbereichs 32b zwei- bis dreimal so groß sein wie die maximale Weite des Hauptbereichs 32a.

Bei der Mutter 22 handelt es sich um eine Sechskant-Flanschmutter, die in eine daran angepasste sechskantige Vertiefung 40 des zweiten Schenkels 30 eingebettet ist. In der Ebene des zweiten Schenkels 30 gesehen ist die Mutter 22 vollständig durch den zweiten Schenkel 30 umschlossen, sodass die Mutter 22 weder nach vorne oder hinten, noch zur Seite aus dem zweiten Schenkel 30 herausfallen kann. Auch ein Herausfallen in Richtung des ersten Schenkels 28, d.h. in Fig. 1A bis 1C nach oben, ist nicht möglich, da die maximale Weite des Aufnahmespalts 32 im Bereich der Mutter 22, d.h. also die maximale Weite des Hauptbereichs 32a, geringer ist als die axiale Abmessung der Mutter 22.

Dementsprechend kann die Mutter 22 nur in der axialen Richtung in die Vertiefung 40 eingesetzt werden. Bei der in Fig. 1A bis 1D dargestellten Ausführungsform erfolgt das Einbetten der Mutter 22 in die Vertiefung 40 vor dem Einsetzen des Grundelements 12 in den ersten Schenkel 28, und zwar durch eine Aufnahme 41 des ersten Schenkels 28 für das Grundelement 12 hindurch. Es versteht sich, dass die Aufnahme 41 so groß dimensioniert sein muss, dass die Mutter 22 durch diese hindurch passt. Erst nach dem Einbetten der Mutter 22 in die Vertiefung 40 wird das Grundelement 12 dann in die Aufnahme 41 eingebracht und in dieser form-, kraft- oder stoffschlüssig fixiert, beispielsweise durch Einclipsen, Verrasten oder Verkleben.

Wie Fig. 1D zeigt, ist die Vertiefung 40 nicht in Form eines regelmäßigen Sechskants ausgebildet, sondern in einer radialen Richtung etwas gestreckt, genauer gesagt in einer Richtung von dem Verbindungsabschnitt 34 hin zu den freien Enden der Schenkel 28, 30, in Fig. 1D angedeutet durch den Pfeil 42. Hierdurch ist eine gewisse Bewegung der Mutter 22 in der Richtung des Pfeils 42 möglich, und zwar nur in dieser Richtung. Die Mutter 22 hat in der Richtung des Pfeils 42 also etwas Spiel in der Vertiefung 40, was die Ausrichtung der Mutter 22 mit einer in dem Bauteil 38 vorgesehenen Bohrung 44 und dem Schraubelement und somit die Positionierung der Toleranzausgleichsvorrichtung 10 an dem Bauteil 38 insgesamt erleichtert.

In Fig. 1A bis 1C ist die Toleranzausgleichsvorrichtung 10 in einem Ausgangs- oder Transportzustand dargestellt, in welchem die Toleranzausgleichsvorrichtung 10 an einen Montageort geliefert wird. In diesem Zustand ist das Ausgleichselement 16 nahezu vollständig in das Grundelement 12 hineingedreht. Um zu verhindern, dass das Ausgleichselement 16 zu weit in das Grundelement 12 hineingedreht werden und darin blockieren kann, bildet das Halteelement 26 einen Endanschlag 46 aus (Fig. 1D), welcher die Eindrehbewegung des Ausgleichselements 16 begrenzt. Außerdem bildet das Halteelement 26 eine Federzunge 48 aus, die mit dem im Ausgangszustand befindlichen Ausgleichselement 16 in Eingriff steht, um ein unbeabsichtigtes Herausdrehen des Ausgleichselements 16 aus dem Grundelement 12 zu verhindern. Die Federzunge 48 bildet folglich eine Transportsicherung. Es versteht sich, dass die Federzunge 48 so dimensioniert ist, dass das Ausgleichselement 16 unter Aufbringung eines ausreichend großen Drehmoments die Federzunge 48 überwinden und sich von dieser lösen kann, insbesondere wenn das Schraubelement durch das Ausgleichselement 16 hindurchgeführt ist und beim Einschrauben in die Mutter 22 über das Federelement 24 ein Drehmoment auf das Ausgleichselement 16 ausübt.

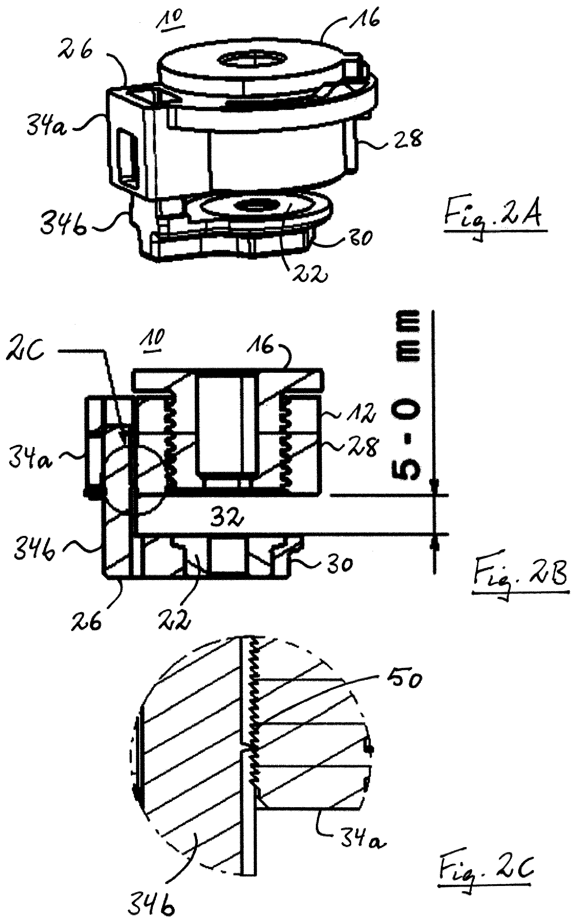

In Fig. 2A bis 2C ist eine zweite, erfindungsgemäße Ausführungsform einer Toleranzausgleichsvorrichtung 10 dargestellt, welche sich von der voranstehend beschriebenen ersten Ausführungsform im Wesentlichen in der Ausbildung des Halteelements 26 unterscheidet.

So bildet der erste Schenkel 28 des Halteelements 26 der zweiten Ausführungsform zum einen selbst das Grundelement 12 aus, d.h. das Ausgleichselement 16 steht direkt mit dem ersten Schenkel 28 des Halteelements 26 in Gewindeeingriff.

Zum anderen ist das Halteelement 26 der zweiten Ausführungsform zweiteilig ausgebildet. Genauer gesagt setzt sich der Verbindungsabschnitt 34 hier aus einem ersten Verbindungsteilabschnitt 34a und einem separaten zweiten Verbindungsteilabschnitt 34b zusammen, wobei der erste Verbindungsteilabschnitt 34a in den ersten Schenkel 28 und der zweite Verbindungsteilabschnitt 34b in den zweiten Schenkel 30 übergeht.

Der erste Verbindungsteilabschnitt 34a und der zweite Verbindungsteilabschnitt 34b stehen über eine Sägezahnverrastung 50 in Eingriff, die es erlaubt, den ersten Verbindungsteilabschnitt 34a und den zweiten Verbindungsteilabschnitt 34b unidirektional in der axialen Richtung relativ zueinander zu verschieben, nämlich derart, dass die Schenkel 28, 30 aufeinander zu bewegt werden. So können die Schenkel 28, 30 in einem Vormontagezustand einen maximalen Abstand zueinander aufweisen und nach dem Aufschieben der Toleranzausgleichsvorrichtung 10 auf das Bauteil 38 zusammengeschoben werden, bis das Bauteil 38 spielfrei in dem Aufnahmespalt 32 aufgenommen ist. Auf diese Weise lässt sich die Weite des Aufnahmespalts 32 leicht an unterschiedlich dicke Bauteile 38 anpassen. Je nach konkreter Ausbildung der Verbindungsteilabschnitte 34a, 34b und der daran vorgesehenen Sägezahnverrastung 50 kann die Weite des Aufnahmespalts 32 beispielsweise in einem Bereich von 0 mm bis 5 mm oder sogar darüber hinaus variiert werden.

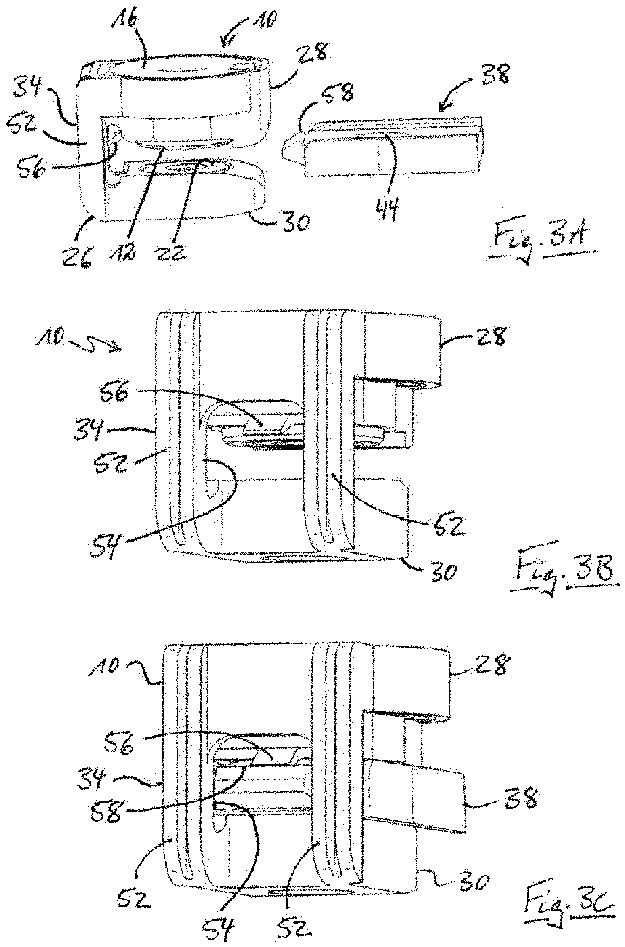

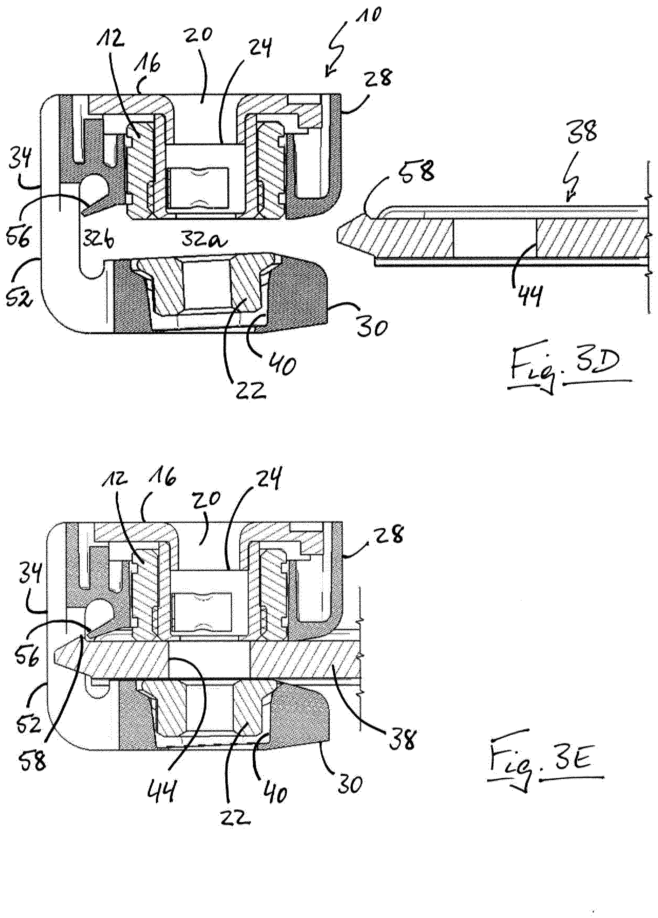

In Fig. 3A bis 3E ist eine dritte, nicht erfindungsgemäße Ausführungsform einer Toleranzausgleichsvorrichtung 10 dargestellt, welche sich von der ersten Ausführungsform zum einen darin unterscheidet, dass der Verbindungsabschnitt 34 des Halteelements 26 hier nicht vollwandig ausgebildet ist, sondern durch zwei parallel beabstandete Verbindungsstege 52, die zwischen sich ein Fenster 54 definieren, welches von der Rückseite der Toleranzausgleichsvorrichtung 10 her Zugang zu dem Aufnahmespalt 32 gewährt.

Zum anderen unterscheidet sich die in Fig. 3A bis 3E gezeigte dritte Ausführungsform der Toleranzausgleichsvorrichtung 10 von der ersten Ausführungsform darin, dass ein Sicherungselement zur Sicherung des in dem Aufnahmespalt 32 aufgenommenen Bauteils 38 vorgesehen ist.

Bei dem Sicherungselement handelt es sich beispielsweise um eine elastische Rastzunge 56, welche aus dem ersten Schenkel 28 hervorgeht und sich in Richtung des Verbindungsabschnitts 34, genauer gesagt in Richtung des Fensters 54, schräg nach unten in den Endbereich 32b des Aufnahmespalts 32 erstreckt.

Entsprechend ist im Bereich des zur Einführung in den Aufnahmespalt 32 vorgesehenen vorderen Endes des Bauteils 38 ein der Rastzunge 56 zugewandter, d.h. nach oben in Richtung des ersten Schenkels 28 weisender, Rastvorsprung 58 ausgebildet.

Die Rastzunge 56 und der Rastvorsprung 58 sind derart aneinander angepasst, dass die Rastzunge 56 beim Einführen des Bauteils 38 in den Aufnahmespalt 32 durch den Rastvorsprung 58 in Richtung des ersten Schenkels 28 ausgelenkt wird, in den Figuren also nach oben, und, sobald das Bauteil 38 seine Endlage in dem Aufnahmespalt 32 erreicht, d.h. also vollständig in der Toleranzausgleichsvorrichtung 10 aufgenommen ist, hinter dem Rastvorsprung 58 zurückschnappt, um diesen zu hintergreifen und das Bauteil 38 dadurch gegen eine unbeabsichtigte Bewegung aus der Toleranzausgleichsvorrichtung 10 heraus zu sichern.

Der den Rastvorsprung 58 ausbildende vordere Endbereich des Bauteils 38 ragt in diesem Zustand in das durch die Verbindungsstege 52 definierte Fenster 54 hinein.

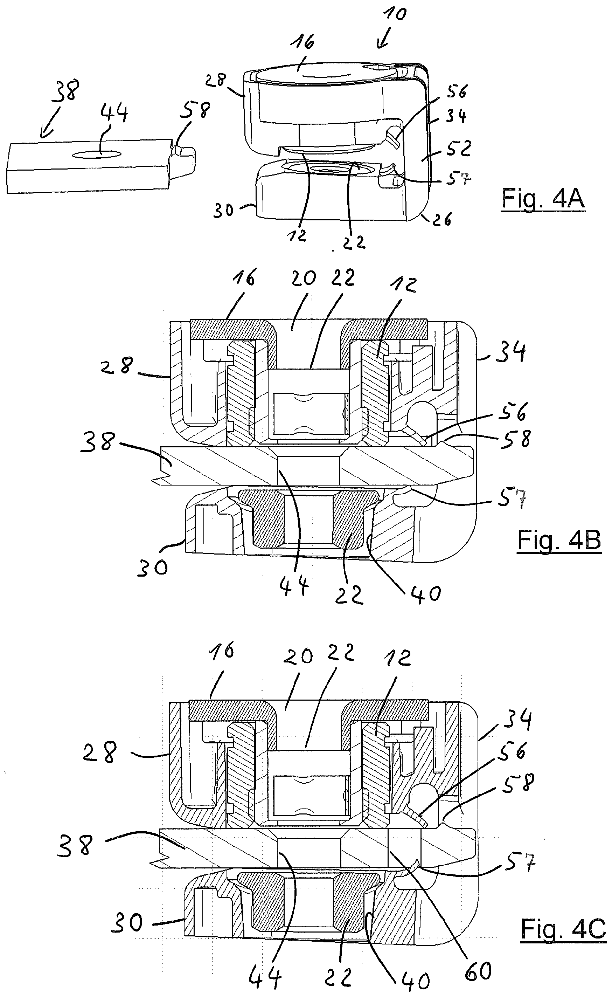

In Fig. 4A bis 4D sind Varianten einer vierten, nicht erfindungsgemäßen Ausführungsform einer Toleranzausgleichsvorrichtung 10 dargestellt, welche sich von der voranstehend beschriebenen zweiten Ausführungsform im Wesentlichen dadurch unterscheidet, dass sie zusätzlich zu der bereits erwähnten ersten Rastzunge 56 eine zweite Rastzunge 57 umfasst, welche aus dem zweiten Schenkel 30 hervorgeht und sich in Richtung des Verbindungsabschnitts 34, genauer gesagt in Richtung des Fensters 54, schräg nach oben in den Endbereich 32b des Aufnahmespalts 32 erstreckt, sodass sie beim Einführen des Bauteils 38 in den Aufnahmespalt 32 in Richtung des zweiten Schenkels 30 ausgelenkt wird, in den Figuren also nach unten.

Je nach Ausbildung des Bauteils 38 kann die ausgelenkte zweite Rastzunge 57 das Bauteil somit in axialer Richtung in Richtung des ersten Schenkels 28 drücken, in Fig. 4B also nach oben, wodurch das Zusammenwirken zwischen der ersten Rastzunge 56 und dem Rastvorsprung 58 des Bauteils 38 und folglich die Sicherung des Bauteils 38 in der Toleranzausgleichsvorrichtung 10 verbessert wird.

Alternativ kann das Bauteil 38 wie in Fig. 4C gezeigt eine Rastöffnung 60 aufweisen, in welche die zweite Rastzunge 57 zur zusätzlichen Sicherung des Bauteils 38 in der der Toleranzausgleichsvorrichtung 10 eingreifen kann.

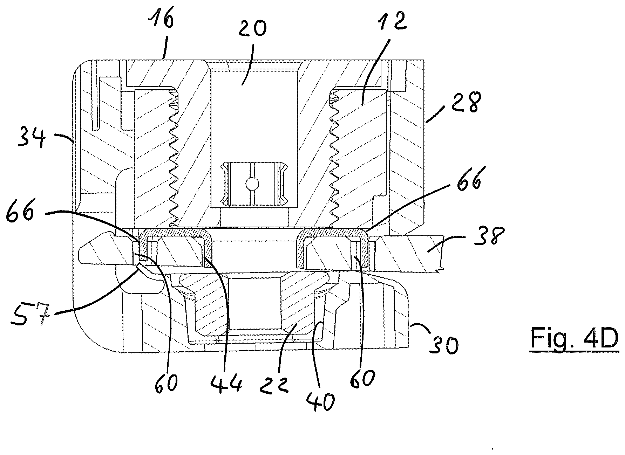

Ferner kann wenigstens ein Einleger 66 an dem Bauteil 38 angebracht sein (Fig. 4D). Der Einleger 66 kann ein im Wesentlichen U-förmiges Querschnittprofil aufweisen, umfassend eine Basis und zwei gleich oder unterschiedlich lange gegenüberliegenden Seitenwände, welche im Wesentlichen rechtwinklig mit der Basis verbunden sind. Der Einleger 66 kann aus Metall oder Kunststoff gefertigt sein.

Der Einleger 66 kann so dimensioniert sein, dass seine eine Seitenwand in eine Rastöffnung 60 des Bauteils 38 und die andere Seitenwand in die Bohrung 44 des Bauteils 38 ragt, während sich die Basis des Einlegers 66 auf einer Oberseite des Bauteils 38 anliegt. Der Einleger 66 sorgt somit für eine bereichsweise Erhöhung der Stärke des Bauteils 38, die einerseits zu einer stärkeren Klemmung des Bauteils 38 in der Toleranzausgleichsvorrichtung 10 führt und andererseits die Verrastung der zweiten Rastzunge 57 in der Rastöffnung begünstigt, wodurch die Sicherung des Bauteils 38 in der Toleranzausgleichsvorrichtung 10 noch weiter verbessert wird.

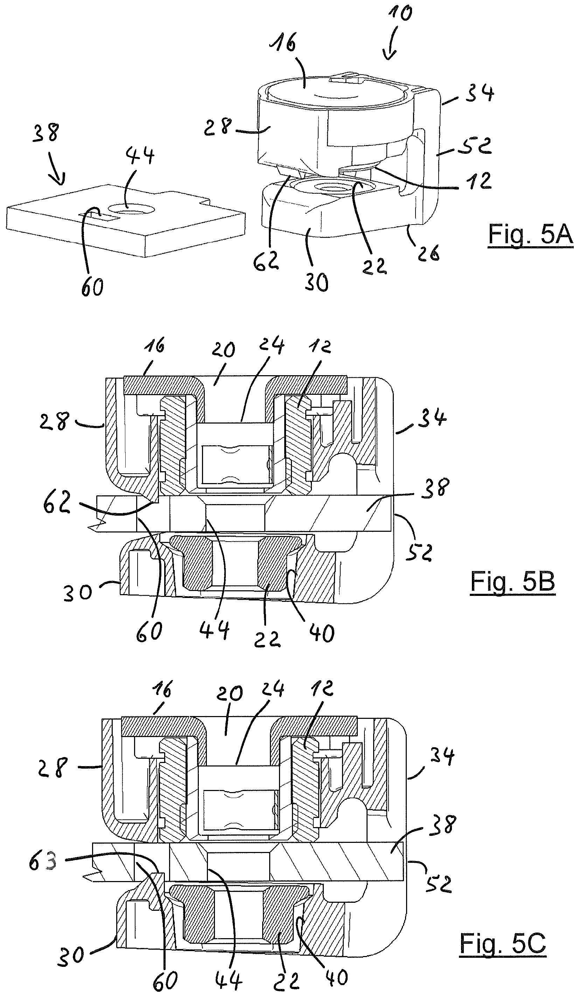

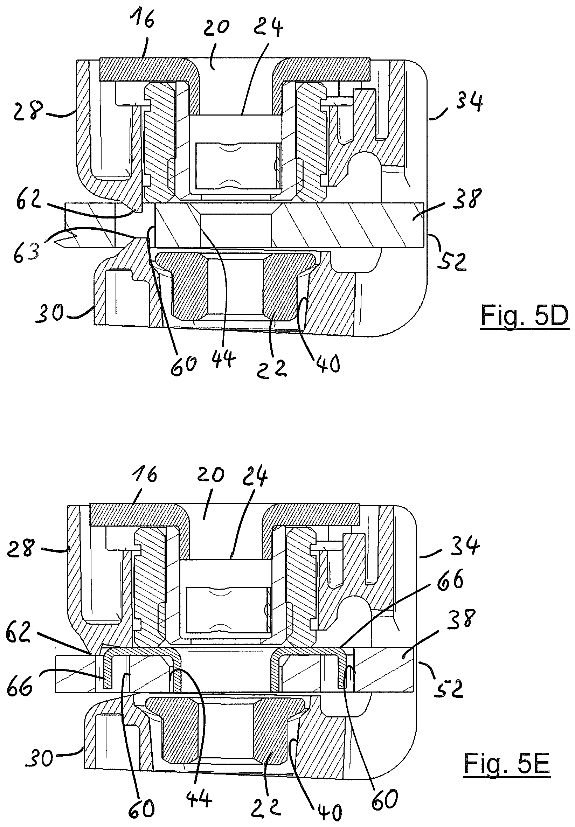

In Fig. 5A bis 5E sind Varianten einer fünften, nicht erfindungsgemäßen Ausführungsform einer Toleranzausgleichsvorrichtung 10 dargestellt, welche sich von der voranstehend beschriebenen zweiten und dritten Ausführungsform im Wesentlichen dadurch unterscheidet, dass das Sicherungselement einen Rastkeil 62, 63 umfasst. Insbesondere kann das Sicherungselement einen ersten Rastkeil 62, welcher aus dem ersten Schenkel 28 hervorgeht und sich in den Zeichnungen nach unten in den Aufnahmespalt 32 hinein erstreckt (Fig. 5A und 5B), oder einen zweiten Rastkeil 63 umfassen, welcher aus dem zweiten Schenkel 30 hervorgeht und sich in den Zeichnungen nach oben in den Aufnahmespalt 32 hinein erstreckt (Fig. 5C). Ebenso ist eine Variante denkbar, welche sowohl einen solchen ersten Rastkeil 62 als auch einen solchen zweiten Rastkeil 63 aufweist (Fig. 5D).

Der jeweilige Rastkeil 62, 63 ist dazu ausgebildet, in eine in dem Bauteil 38 ausgebildete Rastöffnung 60 einzugreifen und/oder mit einem an dem Bauteil 38 angebrachten Einleger 66 zusammenzuwirken.

Insbesondere kann der jeweilige Rastkeil 62, 63 flexibel sein und ein Querschnittprofil aufweisen, welches sich ausgehend von dem ersten Schenkel 28 bzw. von dem zweiten Schenkel 20 aus nach unten bzw. nach oben hin verjüngt, wobei sich eine gerade Seitenfläche des Rastkeils 62 auf einer dem Verbindungsabschnitt 34 zugewandten Seite des Rastkeils 62, 63 befindet und sich eine schräge Seitenfläche des Rastkeils 62, 63 auf einer dem Verbindungsabschnitt 34 abgewandten Seite des Rastkeils 62, 63, d.h. auf einer dem Eingangsbereich des Aufnahmespalts 32 zugewandten Seite, befindet. Zudem kann der Rastkeil 62, 63 derart ausgestaltet sein, dass ein wesentlicher Teil des Rastkeils 62, 63 in den Aufnahmespalt 32 ragt, sodass, sobald das Bauteil 38 seine Endlage in dem Aufnahmespalt 32 erreicht, ein Abschnitt der geraden Seitenfläche des Rastkeils 62, 63 und ein Abschnitt einer Seitenwand der Rastöffnung 60 in Kontakt stehen. Dies ermöglicht eine besonders zuverlässige Sicherung des Bauteils 38 im Aufnahmespalt 32 der Toleranzausgleichsvorrichtung 10.

Die Flexibilität des Rastkeils 62, 63 und/oder der Volumenanteil des Rastkeils 62, 63, der in den Aufnahmespalt 32 ragt, sind bzw. ist vorzugsweise so gewählt, dass sowohl ein problemloses Einführen des Bauteils 38 in den Aufnahmespalt 32, also auch eine sichere Verkeilung zwischen der Rastöffnung 60 und dem Rastkeil 62, 63 gewährleistet werden kann.

In einem Fall in dem ein voranstehend beschriebener Einleger 66 an dem Bauteil 38 angebracht ist, kann der Rastkeil 62, 63 auf seiner dem Verbindungsabschnitt 34 zugewandten Seite eine Einkerbung aufweisen, welche ein sich in Richtung des Aufnahmespalts 32 aufweitendes Querschnittprofil aufweist (Fig. 5E). Genauer umfasst die Einkerbung eine dem Verbindungsabschnitt 34 zugewandte Seitenfläche und eine dem Verbindungsabschnitt 34 abgewandte Seitenfläche.

Entsprechend kann, wenn das Bauteil 38 seine Endlage in dem Aufnahmespalt 32 erreicht, ein Abschnitt der dem Verbindungsabschnitt 34 zugewandten Seitenfläche der Einkerbung und ein Oberflächenabschnitt der sich in der Rastöffnung 60 befindenden Seitenwand des Einlegers 66 in Kontakt stehen, und ein Abschnitt der dem Verbindungsabschnitt 34 abgewandten Seitenfläche der Einkerbung und ein Oberflächenabschnitt der Basis des Einlegers 66 in Kontakt stehen. Die vorangehend beschriebene stärkere Klemmung des Bauteils 38 in der Toleranzausgleichsvorrichtung 10 durch das Anbringen des Einlegers 66 am Bauteil 38 und die zusätzliche Verkeilung zwischen dem Einleger 66 und dem Rastkeil 62, 63 ermöglicht eine noch sicherere Fixierung des Bauteils 38 im Aufnahmespalt 32 der Toleranzausgleichsvorrichtung 10.

Insbesondere kann die Einkerbung ein asymmetrisches Querschnittprofil aufweisen, d.h., ein Winkel zwischen der axialen Richtung und der dem Verbindungsabschnitt 34 zugewandten Seitenfläche kann kleiner sein als ein Winkel zwischen der axialen Richtung und der dem Verbindungsabschnitt 34 abgewandten Seitenfläche. In anderen Worten kann die dem Verbindungsabschnitt 34 abgewandte Seitenfläche flacher ausgeprägt sein als die dem Verbindungsabschnitt 34 zugewandte Seitenfläche. Dies ermöglicht ein leichteres Einführen des Bauteils 38 in den Aufnahmespalt 32. Zusätzlich kann im eingerasteten Zustand des Bauteils 38 im Aufnahmespalt 32 die Kontaktfläche zwischen der Einkerbung und dem Einleger 66 vergrößert werden, was wiederum für eine verbesserte Verkeilung zwischen dem Einleger 66 und dem Rastkeil 62, 63 sorgt.

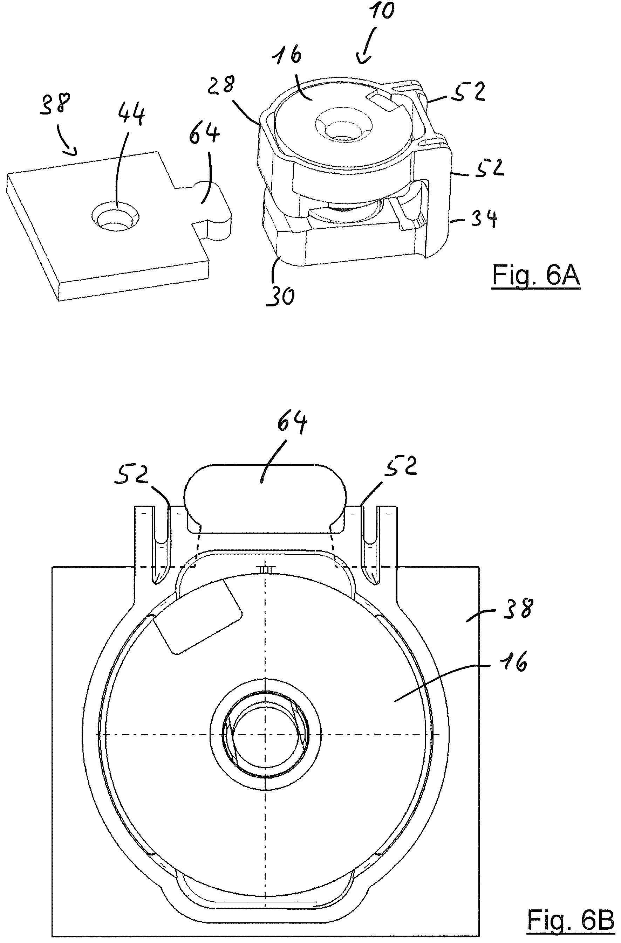

In Fig. 6A und 6B ist eine sechste, nicht erfindungsgemäße Ausführungsform einer Toleranzausgleichsvorrichtung 10 dargestellt, welche sich von der voranstehend beschriebenen zweiten Ausführungsform im Wesentlichen dadurch unterscheidet, dass die zwei parallel beabstandeten Verbindungsstege 52, die zwischen sich ein Fenster 54 definieren, ein Sicherungselement bilden.

Entsprechend ist im Bereich des zur Einführung in den Aufnahmespalt 32 vorgesehenen vorderen Endes des Bauteils 38 ein in Richtung der Einführungsbewegung weisender Rastanker 64 ausgebildet. Genauer gesagt geht der Rastanker 64 im Wesentlichen senkrecht aus einer Stirnseite des Bauteils 38 hervor. In axialer Richtung gesehen, d.h. in einer Draufsicht auf das Bauteil 38 betrachtet, kann der Rastanker 64 eine im Wesentlichen T-förmige Querschnittform aufweisen, welche einen aus des Stirnseite des Bauteils 38 senkrecht hervorgehenden Längsabschnitt und einen daran anschließenden, sich senkrecht zum Längsabschnitt und parallel zur Stirnseite erstreckenden Querabschnitt umfasst.

Der Rastanker 64 und die beiden beabstandeten Verbindungsstege 52 sind derart aneinander angepasst, dass beim Einführen des Bauteils 38 in den Aufnahmespalt 32, genauer gesagt beim Einführen des Rastankers 64 in das durch die Verbindungsstege 52 gebildete Fenster 54, der Querabschnitt des Rastankers 64 die Verbindungsstege 52 auseinanderdrückt. Sobald das Bauteil 38 seine Endlage in dem Aufnahmespalt 32 erreicht, also vollständig in der Toleranzausgleichsvorrichtung 10 aufgenommen ist, schnappen die Verbindungsstege 52 hinter dem Querabschnitt in ihre Ausgangsposition zurück und hintergreifen den Querabschnitt des Rastankers 64, wodurch das Bauteil 38 in der Toleranzausgleichsvorrichtung 10 gesichert wird.

Um das Auseinanderdrücken der beiden beabstandeten Verbindungsstege 52 des Verbindungsabschnitts 34 während des Einführens des Bauteils 38 in den Aufnahmespalt 32 zu erleichtern, ist der Querabschnitt an seinen Querenden abgerundet.

Ferner gilt, dass je größer die Querabmessung des Querabschnitts des Rastankers 64 ist und/oder je weniger flexibel die beabstandeten Verbindungsstege 52 sind, desto größer die Kraft ist, welche benötigt wird, um den Rastanker 64 zwischen den Verbindungsstegen 52 hindurchzudrücken. Die maximale Breite des Querabschnitts des Rastankers 64 und die Flexibilität der Verbindungsstege 52 sind daher bevorzugt so gewählt, dass sowohl ein problemloses Einführen des Bauteils 38 in die Toleranzausgleichsvorrichtung, als auch eine sichere Verankerung des Rastankers 64 am Verbindungsabschnitt 34 gewährleistet ist.

Es versteht sich, dass die voranstehend beschriebenen unterschiedlichen Sicherungselemente jeweils einzeln oder in beliebiger Kombination miteinander realisiert werden können.

### Bezugszeichenliste

- 10: Toleranzausgleichsvorrichtung
- 12: Grundelement
- 14: Innengewinde
- 16: Ausgleichselement
- 18: Außengewinde
- 20: Durchgang
- 22: Mutter
- 24: Federelement
- 26: Halteelement
- 28: erster Schenkel
- 30: zweiter Schenkel
- 32: Aufnahmespalt
- 32a: Hauptbereich
- 32b: Endbereich
- 34: Verbindungsabschnitt
- 34a: erster Verbindungsteilabschnitt
- 34b: zweiter Verbindungsteilabschnitt
- 36: Nut
- 38: Bauteil
- 40: Vertiefung
- 41: Aufnahme
- 42: Pfeil
- 44: Bohrung
- 46: Endanschlag
- 48: Federzunge
- 50: Sägezahnverrastung
- 52: Verbindungssteg
- 54: Fenster
- 56: erste Rastzunge
- 57: zweite Rastzunge
- 58: Rastvorsprung
- 60: Rastöffnung
- 62: erster Rastkeil
- 63: zweiter Rastkeil
- 64: Rastanker
- 66: Einleger

## Patentansprüche

1. Toleranzausgleichsvorrichtung (10) umfassend
ein Grundelement (12),
ein mit dem Grundelement (12) in Gewindeeingriff stehendes Ausgleichselement (16), welches einen sich in einer axialen Richtung erstreckenden Durchgang (20) für ein Schraubelement ausbildet,
eine Mutter (22), in welche das Schraubelement einschraubbar ist, und
ein Halteelement (26) mit einem das Grundelement (12) haltenden ersten Schenkel (28), einem die Mutter haltenden zweiten Schenkel (30) und einem den ersten und zweiten Schenkel (28, 30) verbindenden Verbindungsabschnitt (34),
wobei der Verbindungsabschnitt (34) durch zwei getrennte Verbindungsteilabschnitte (34a, 34b) gebildet ist, die in der axialen Richtung relativ zueinander verschiebbar sind, und
wobei der erste und zweite Schenkel (28, 30) unter Ausbildung eines Aufnahmespalts (32) zur Aufnahme eines Bauteils (38) zueinander beabstandet sind,
**dadurch gekennzeichnet,**
**dass** die Mutter (22) in dem zweiten Schenkel (30) derart geführt ist, dass sie sich innerhalb einer zur axialen Richtung rechtwinklig erstreckenden Ebene nur in einer Richtung bewegen lässt.

2. Toleranzausgleichsvorrichtung (10) nach Anspruch 1,
**dadurch gekennzeichnet,**
**dass** die Verbindungsteilabschnitte (34a, 34b) unidirektional in der axialen Richtung relativ zueinander verschiebbar sind.

3. Toleranzausgleichsvorrichtung (10) nach Anspruch 1 oder 2,
**dadurch gekennzeichnet,**
**dass** die Verbindungsteilabschnitte (34a, 34b) über eine Sägezahnverrastung (50) miteinander in Kontakt stehen.

4. Toleranzausgleichsvorrichtung (10) nach zumindest einem der vorherigen Ansprüche,
**dadurch gekennzeichnet,**
**dass** der zweite Schenkel (30) die Mutter (22) derart umschließt, dass die Mutter (22) nur in der axialen Richtung in den zweiten Schenkel (30) einsetzbar ist.

5. Toleranzausgleichsvorrichtung (10) nach zumindest einem der vorherigen Ansprüche,
**dadurch gekennzeichnet,**
**dass** der zweite Schenkel (30) die Mutter (22) in einer rechtwinklig zur axialen Richtung orientierten Ebene vollständig umschließt.

6. Toleranzausgleichsvorrichtung (10) nach zumindest einem der vorherigen Ansprüche,
**dadurch gekennzeichnet,**
**dass** das Haltelement (26) aus einem Kunststoffmaterial gebildet ist.

7. Toleranzausgleichsvorrichtung (10) nach zumindest einem der vorherigen Ansprüche,
**gekennzeichnet durch**
wenigstens ein, insbesondere im Endbereich (32b) des Aufnahmespalts (32) angeordnetes, Sicherungselement, durch welches ein im Aufnahmespalt (32) aufgenommenes Bauteil (38) an der Toleranzausgleichsvorrichtung (10) sicherbar ist.

## Claims

1. A tolerance compensation apparatus (10) comprising
a base element (12);
a compensation element (16) which is in threaded engagement with the base element (12) and which forms a passage (20) extending in an axial direction for a screw element;
a nut (22) into which the screw element can be screwed; and
a holding element (26) having a first limb (28) holding the base element (12), a second limb (30) holding the nut, and a connection section (34) connecting the first and second limbs (28, 30),
wherein the connection section (34) is formed by two separate connection part sections (34a, 34b) which are displaceable in the axial direction relative to one another, and
wherein the first and second limbs (28, 30) are spaced apart from one another while forming a reception gap (32) for receiving a component (38),
**characterized in that**
the nut (22) is guided in the second limb (30) such that it can be moved in only one direction within a plane extending at a right angle to the axial direction.

2. A tolerance compensation apparatus (10) according to claim 1,
**characterized in that**
the connection part sections (34a, 34b) are unidirectionally displaceable in the axial direction relative to one another.

3. A tolerance compensation apparatus (10) according to claim 1 or 2,
**characterized in that**
the connection part sections (34a, 34b) are in contact with one another via a sawtooth latching (50).

4. A tolerance compensation apparatus (10) according to at least one of the preceding claims,
**characterized in that**
the second limb (30) surrounds the nut (22) such that the nut (22) can be inserted into the second limb (30) only in the axial direction.

5. A tolerance compensation apparatus (10) according to at least one of the preceding claims,
**characterized in that**
the second limb (30) completely surrounds the nut (22) in a plane oriented at a right angle to the axial direction.

6. A tolerance compensation apparatus (10) according to at least one of the preceding claims,
**characterized in that**
the holding element (26) is formed from a plastic material.

7. A tolerance compensation apparatus (10) according to at least one of the preceding claims,
**characterized by**
at least one securing element which is in particular arranged in the end region (32b) of the reception gap (32) and by which a component (38) received in the reception gap (32) can be secured to the tolerance compensation apparatus (10).

## Revendications

1. Dispositif de compensation de tolérance (10), comprenant
un élément de base (12),
un élément de compensation (16) qui est en prise par filetage avec l'élément de base (12) et qui forme un passage (20), s'étendant dans une direction axiale, pour un élément à visser,
un écrou (22) dans lequel l'élément à visser peut être vissé, et
un élément de maintien (26) qui présente une première branche (28) maintenant l'élément de base (12), une deuxième branche (30) maintenant l'écrou, et une portion de liaison (34) reliant les première et deuxième branches (28, 30),
la portion de liaison (34) étant formée par deux portions de liaison partielles séparées (34a, 34b) mobiles l'une par rapport à l'autre dans la direction axiale, et
les première et deuxième branches (28, 30) étant espacées l'une de l'autre en formant un interstice de réception (32) destiné à recevoir un composant (38),
**caractérisé en ce que**
l'écrou (22) est guidé dans la deuxième branche (30) de manière à ne pouvoir être déplacé que dans une seule direction à l'intérieur d'un plan s'étendant à angle droit par rapport à la direction axiale.

2. Dispositif de compensation de tolérance (10) selon la revendication 1,
**caractérisé en ce que**
les portions de liaison partielles (34a, 34b) peuvent être déplacées en translation l'une par rapport à l'autre dans la direction axiale, de manière unidirectionnelle.

3. Dispositif de compensation de tolérance (10) selon la revendication 1 ou 2,
**caractérisé en ce que**
les portions de liaison partielles (34a, 34b) sont en contact l'une avec l'autre par l'intermédiaire d'un encliquetage en dents de scie (50).

4. Dispositif de compensation de tolérance (10) selon l'une au moins des revendications précédentes,
**caractérisé en ce que**
la deuxième branche (30) entoure l'écrou (22) de telle sorte que l'écrou (22) ne peut être inséré dans la deuxième branche (30) que dans la direction axiale.

5. Dispositif de compensation de tolérance (10) selon l'une au moins des revendications précédentes,
**caractérisé en ce que**
la deuxième branche (30) entoure complètement l'écrou (22) dans un plan orienté à angle droit par rapport à la direction axiale.

6. Dispositif de compensation de tolérance (10) selon l'une au moins des revendications précédentes,
**caractérisé en ce que**
l'élément de maintien (26) est réalisé en une matière plastique.

7. Dispositif de compensation de tolérance (10) selon l'une au moins des revendications précédentes,
**caractérisé par**
au moins un élément de blocage qui est disposé en particulier dans la zone d'extrémité (32b) de l'interstice de réception (32) et qui permet de bloquer un composant (38), reçu dans l'interstice de réception (32), sur le dispositif de compensation de tolérance (10).
